# FASCICULE DE BREVET EUROPEEN

(11) **EP 4 511 576 B1**
(45) Date de publication et mention de la délivrance du brevet: **10.06.2026**
(21) Numéro de dépôt: 23713123.0
(22) Date de dépôt: 24.03.2023
(51) Int. Cl.: F16B 19/10

(54) **DISPOSITIF D'ACCROCHAGE D'UN ELEMENT MOBILE A UNE DOUBLE PAROI**
VORRICHTUNG ZUR BEFESTIGUNG EINES BEWEGLICHEN ELEMENTS AN EINER DOPPELWAND
DEVICE FOR ATTACHING A MOVABLE ELEMENT TO A DOUBLE WALL

(30) Priorité: 19.04.2022 FR 2203604
(43) Date de publication de la demande: 26.02.2025
(73) Titulaire: Renault s.a.s, 92100 Boulogne Billancourt (FR)
(72) Inventeur: BOUILLON, Jean-Charles, 78280 GUYANCOURT (FR)
(86) Numéro de dépôt international: PCT/EP2023/057690
(87) Numéro de publication internationale: WO 2023/202837

(56) Documents cités:
- GB-A- 1 558 097
- JP-A- H08 121 426
- US-A- 4 726 722
- US-A1- 2002 057 953
- US-A1- 2013 257 025
- US-A1- 2020 138 174

## Description

### Domaine technique

La présente invention concerne le domaine des dispositifs d'accrochage de petits objets ou articles divers à une paroi ou cloison, en particulier dans l'habitacle ou un coffre de véhicule automobile.

### Techniques antérieures

On connait de nombreux dispositifs d'accrochage d'objets ou articles dans l'habitacle ou le coffre d'un véhicule automobile. Des crochets fixes ou anneaux peuvent par exemple faciliter le rangement et le transport d'objets dans le véhicule. Cependant ces dispositifs d'accrochage doivent résister à des contraintes mécaniques exigeantes. La paroi sur laquelle est fixé le dispositif d'accrochage peut également s'avérer insuffisamment solide au regard des efforts démultipliés par les porte-à-faux et bras de levier engendrés par le dispositif et sa manipulation par l'utilisateur. En effet les parois de fixation sont généralement des peaux de polypropylène de 2,5 mm d'épaisseur, qui sont sujettes au « poumonage » ou à des phénomènes d'arrachement.

On connait également via le document US 4 726 722 A un dispositif d'accrochage d'un élément mobile à une double paroi.

En parallèle, de nouveaux besoins sont réaffirmés pour des fixations de porte-gobelets, de porte-bouteilles, de supports de téléphone ou tout autre objet sur des parois intérieures visibles de véhicule automobiles.

### Exposé de l'invention

Le but de la présente invention est de proposer un dispositif d'accrochage d'un élément mobile à une paroi de véhicule automobile qui s'avère simple et économique à utiliser tout en présentant d'excellentes propriétés mécaniques de résistance à l'arrachement.

A cet effet, l'invention a pour objet un dispositif d'accrochage d'un élément mobile à une double paroi constituée d'une première paroi et d'une deuxième paroi, le dispositif comprenant une tête d'accrochage appliquée contre une face avant de la première paroi et située en saillie de celle-ci, la tête se prolongeant suivant une direction longitudinale par un dispositif de fixation à clips flexibles traversant les deux parois suivant la direction longitudinale, un pion de verrouillage étant inséré au travers de la tête d'accrochage en traversant également les deux parois et s'interposant entre au moins deux clips flexibles en les écartant pour les agripper simultanément à la première paroi et à la deuxième paroi, caractérisé en ce que les clips flexibles comportent des premières conformations aptes à coopérer en butée avec une face arrière de la première paroi pour plaquer la tête d'accrochage contre la première paroi, ainsi que des deuxièmes et troisièmes conformations aptes à coopérer en butée respectivement avec la face avant et la face arrière de la deuxième paroi, les premières, deuxièmes et troisièmes conformations étant agencées de façon à maintenir un espace prédéterminé IN entre la première paroi et la deuxième paroi.

Le dispositif de l'invention assure de ce fait une fixation propre sur chacune des parois, ainsi qu'un entretoisement ferme entre les cloisons, ce qui confère une grande robustesse et résistance à l'arrachement, tout en utilisant des cloisons d'épaisseurs relativement réduites, de l'ordre de 2,5 mm.

D'autres caractéristiques avantageuses de l'invention sont définies ci-après.

Selon l'invention, les clips flexibles sont constitués de deux clips à bascule disposés symétriquement, chaque clip comportant un arceau en forme de U dont les branches sont reliées à la tête d'accrochage et dont une zone centrale du U supporte une languette s'avançant longitudinalement entre les branches du U.

Selon l'invention, les premières, deuxièmes et troisièmes conformations sont agencées sur la languette de chaque clip, et tournées dans des directions opposées sur les deux clips.

Les premières, deuxièmes et troisièmes conformations sont chacune constituées d'une dent ou d'un épaulement s'étendant transversalement sur toute la largeur de la languette.

Les premières, deuxièmes et troisièmes conformations présentent des flancs de contact avec la première ou la deuxième paroi inclinés d'un angle compris entre 5° et 30° par rapport à un plan transversal perpendiculaire à la direction longitudinale, lorsque les clips flexibles sont écartés par le pion de verrouillage.

Le pion de verrouillage comporte une tête conformée pour s'encastrer dans un évidement de forme complémentaire ménagé dans la tête d'accrochage, la tête du pion étant prolongée par un corps longitudinal traversant une ouverture centrale débouchante de la tête d'accrochage, le corps longitudinal ayant en outre une section transversale dont la forme générale est celle d'un H.

Le pion de verrouillage comporte une jambe d'arrêt s'élevant à partir de la branche centrale du H, la jambe d'arrêt formant une rampe repoussée élastiquement vers l'axe longitudinal du pion au contact du bord de l'ouverture centrale de la tête d'accrochage lors de l'insertion du pion de verrouillage et reprenant élastiquement sa position initiale en échappant au bord de l'ouverture centrale de la tête d'accrochage lorsque le pion de verrouillage est enfoncé complètement dans la tête d'accrochage.

La distance mesurée longitudinalement entre la tête d'accrochage et les troisièmes conformations est comprise entre 8 et 25 mm, et est en particulier de l'ordre de 10 mm.

La tête d'accrochage et le dispositif de fixation à clips flexibles sont réalisés d'un seul tenant en matière plastique, en particulier une matière plastique choisie parmi :
Polyamide fibre de verre renforcé 20% (PA GF20%), polyamide 12 (PA 12), polyoxyméthylène (POM), mix polycarbonate et polybutylène téréphtalate (PCPBT).

La tête d'accrochage comporte une collerette périphérique permettant l'accrochage d'accessoires divers sur la collerette.

L'invention a également pour objet un système de fixation d'un accessoire sur au moins une paroi, comprenant d'une part un organe mâle constitué par un dispositif d'accrochage ayant tout ou partie des caractéristiques précédentes fixé à ladite paroi, et d'autre part un organe femelle solidaire de l'accessoire, l'organe femelle comprenant une empreinte dans laquelle s'insère au moins en partie l'organe mâle ainsi que des crans de verrouillage conformés pour s'agripper automatiquement sur la collerette de la tête d'accrochage via des moyens de rappel élastiques, les crans de verrouillage étant libérables sous l'influence d'un poussoir actionné manuellement à l'encontre des moyens de rappel élastiques.

L'invention a également pour objet un véhicule automobile, comprenant une première et une deuxième parois sensiblement parallèles et non accolées, ainsi qu'au moins un dispositif d'accrochage ayant tout ou partie des caractéristiques précédentes fixé auxdites parois.

L'invention sera mieux comprise à la lecture de la description suivante d'un exemple non limitatif de l'invention, et à la lumière des dessins annexés.
[Fig. 1] est une vue en coupe d'un dispositif d'accrochage selon l'invention, fixé sur une double paroi avant insertion du pion de verrouillage dans la tête d'accrochage.
[Fig. 2] est une vue similaire à la figure 1, après insertion complète du pion de verrouillage dans la tête d'accrochage.
[Fig. 3] est une vue de face du dispositif d'accrochage de l'invention, le pion de verrouillage n'étant pas représenté.
[Fig. 4] est une vue du dispositif d'accrochage de l'invention, suivant le plan de coupe A-A de la figure 3, le pion de verrouillage n'étant pas représenté.
[Fig. 5] est une vue du dessus du dispositif d'accrochage de l'invention, suivant la flèche F de la figure 4, le pion de verrouillage n'étant pas représenté.
[Fig. 6] est une vue du dessus du dispositif d'accrochage de l'invention, suivant la flèche F de la figure 4, le pion de verrouillage étant représenté avant son insertion dans la tête d'accrochage.
[Fig. 7] est une vue de face suivant la flèche G du pion de verrouillage seul.
[Fig. 8] est une vue du dispositif d'accrochage similaire à la figure 5 sans le pion de verrouillage, indiquant les principales dimensions du dispositif.

L'expression « sensiblement » signifie qu'un léger écart est admis dans le cadre de l'invention par rapport à une valeur nominale déterminée. Par exemple « sensiblement vertical » signifie qu'une inclinaison de l'ordre de 10° par rapport à une direction strictement verticale est admise dans le périmètre de l'invention.

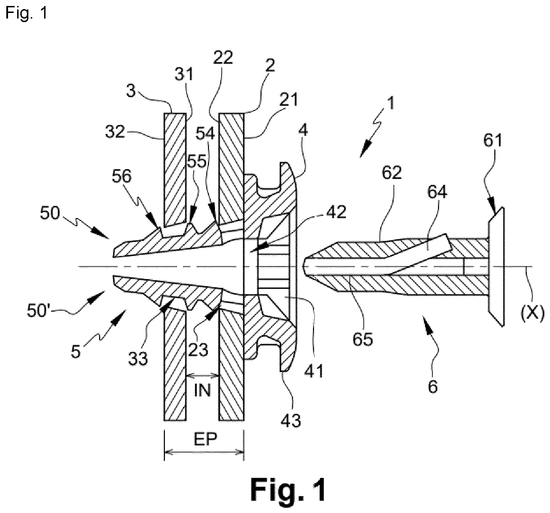

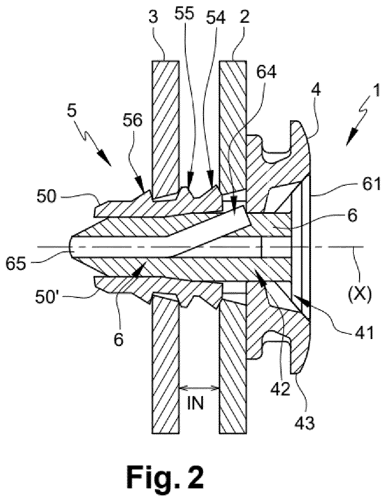

On a représenté aux figures 1 et 2 un dispositif d'accrochage 1 d'un élément mobile à une double paroi. L'élément mobile (non représenté) désigne ici un objet ou article quelconque destiné à être accroché à la double paroi par des moyens qui seront détaillés plus loin.

L'invention s'applique particulièrement à l'habitacle ou au coffre d'un véhicule automobile, mais n'est aucunement limitée à ce domaine, le dispositif pouvant être utilisé dans bien d'autres domaines d'application disposant de parois fines pour un tel accrochage. Les parois indiquées ici sont typiquement en polypropylène d'une épaisseur de 2,5 mm.

La double paroi est constituée d'une première paroi 2 visible d'un utilisateur, par exemple depuis l'habitacle d'un véhicule, et d'une deuxième paroi 3 disposée à l'arrière de la première paroi 2 et donc non visible de l'utilisateur. Les deux parois 2, 3 sont sensiblement parallèles et ne sont pas accolées l'une à l'autre au moins dans une zone destinée à recevoir le dispositif d'accrochage 1.

L'épaisseur globale EP des deux parois 2, 3 mesurée suivant une direction perpendiculaire aux parois est comprise entre 8 et 25 mm. Dans l'exemple illustré sur les figures 1 et 2, cette épaisseur EP est de l'ordre de 10 mm, incluant un espace interne délimité par les deux parois 2, 3.

Le dispositif de l'invention comprend une tête d'accrochage 4 appliquée contre une face avant 21 de la première paroi 2 et située en saillie de celle-ci.

La tête d'accrochage 4 se prolonge suivant une direction longitudinale X par un dispositif de fixation 5 à clips flexibles traversant les deux parois 2, 3 suivant la direction longitudinale X.

Comme illustré sur les figures 1 et 2, un pion de verrouillage 6 est inséré au travers de la tête d'accrochage 4 suivant la direction longitudinale X. Ce pion de verrouillage traverse également les deux parois 2, 3 et s'interpose entre au moins deux clips flexibles 50, 50' du dispositif de fixation 5 en les écartant l'un de l'autre pour les agripper simultanément à la première paroi 2 et à la deuxième paroi 3 selon un principe de cheville de fixation. On appelle également « clip verrou » ce type de fixation utilisant un pion de verrouillage garantissant la fixation sur les parois.

Les clips flexibles 50, 50' sont constitués de deux clips à bascule de mêmes géométries disposés symétriquement par rapport à l'axe central longitudinal du dispositif. Un premier clip 50 est disposé en partie supérieure du dispositif tandis qu'un deuxième clip 50' est disposé en partie inférieure du dispositif, de façon symétrique au premier c'est-à-dire inversée à 180° par rapport à ce dernier.

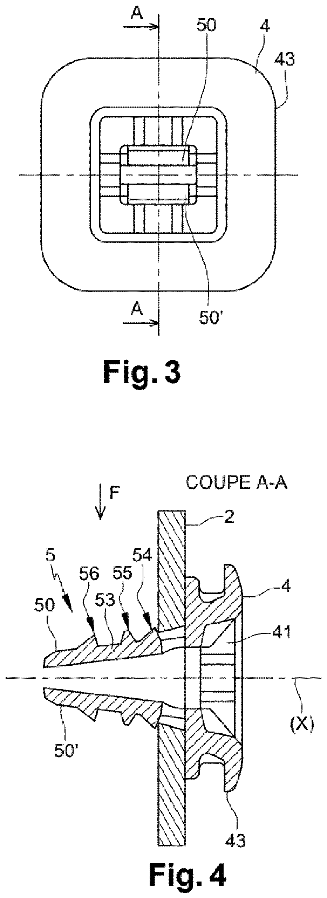

Par souci de clarté et pour ne pas alourdir la description, ce qui est décrit en référence au premier clip s'applique au deuxième clip suivant la symétrie indiquée ci-dessus. En référence aux figures 3 à 5 qui illustrent le dispositif d'accrochage de l'invention sans le pion de verrouillage, chaque clip 50, 50' comporte un arceau en forme de U dont les branches 51 sont reliées à la tête d'accrochage 4. Les branches 51 du U se rejoignent dans une zone centrale 52 qui supporte une languette 53 s'avançant longitudinalement entre les branches 51 du U.

Comme illustré sur la figure 1, en l'absence de contrainte exercée par le pion de verrouillage 6, chaque clip 50, 50' s'étend globalement dans un plan incliné par rapport à la direction longitudinale X d'un angle compris entre 5° et 20°. Les deux clips 50, 50' sont agencés de façon à converger à l'opposé de la tête d'accrochage 4, de façon à pouvoir s'insérer facilement dans les ouvertures 23, 33 prévues respectivement dans les cloisons 2, 3.

Sous l'influence du pion de verrouillage 6 pendant et après son insertion (figure 2) entre les clips 50, 50', ceux-ci s'écartent jusqu'à être redressés suivant une direction sensiblement parallèle à la direction longitudinale X.

Comme le montrent les figures 1 à 5, les clips flexibles 50, 50' comportent des premières conformations 54 aptes à coopérer en butée avec une face arrière 22 de la première paroi 2 pour plaquer la tête d'accrochage 4 contre la face avant 21 de la première paroi 2. Les clips flexibles comportent également des deuxièmes conformations 55 et des troisièmes conformations 56 aptes à coopérer en butée respectivement avec la face avant 31 et la face arrière 32 de la deuxième paroi 3. Les premières 54, deuxièmes 55 et troisièmes 56 conformations sont agencées sur la languette 53 de chaque clip 50, 50', et tournées dans des directions opposées sur les deux clips. Autrement dit, les conformations du premier clip 50 disposé en partie haute sont orientées vers le haut tandis que les conformations du deuxième clip 50' en partie basse sont orientées vers le bas.

Les premières 54, deuxièmes 55 et troisièmes 56 conformations sont avantageusement agencées de façon à maintenir un espace prédéterminé IN entre la première paroi 2 et la deuxième paroi 3 (figures 2 et 3). De ce fait le dispositif d'accrochage de l'invention assure non seulement son accrochage sur chacune des parois 2 et 3 mais constitue également une interface interne agissant comme une entretoise qui solidarise de façon extrêmement solide les deux parois 2 et 3.

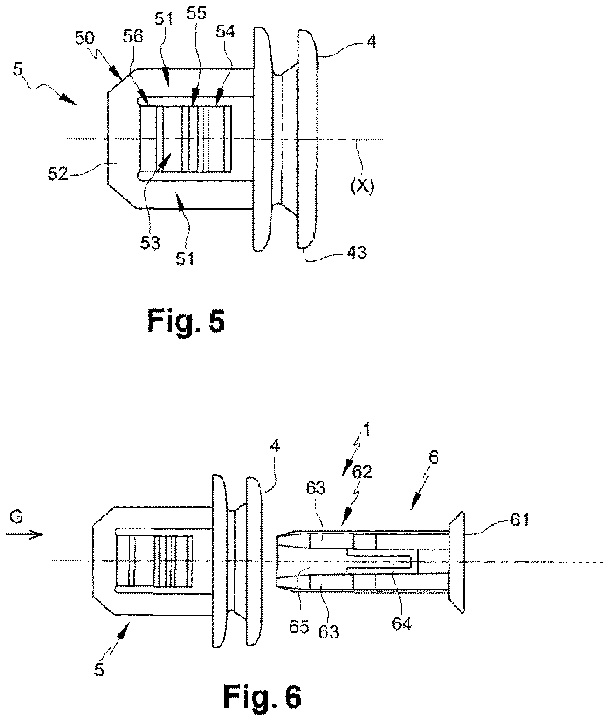

Les premières 54, deuxièmes 55 et troisièmes 56 conformations sont chacune constituées d'une dent ou d'un épaulement s'étendant transversalement sur toute la largeur de la languette 53, visible depuis le dessus (figure 5). La largeur de la languette 53 est considérée suivant une direction transversale à la direction longitudinale X.

Les premières 54, deuxièmes 55 et troisièmes 56 conformations présentent des flancs de contact inclinés avec la première 2 ou la deuxième 3 parois. Ces flancs sont inclinés d'un angle compris entre 5° et 30° par rapport à un plan transversal perpendiculaire à la direction longitudinale X, lorsque les clips flexibles 50, 50' sont écartés par le pion de verrouillage 6, comme visible à la figure 2. Cette inclinaison des flancs de contact facilite le contact par coincement avec les bords des ouvertures 23 et 33 des cloisons lors du redressement des clips flexibles 50, 50'. Le redressement des clips flexibles va jusqu'au coincement ou pincement de la première cloison 2 entre la tête d'accrochage 4 et la première conformation 54 et au coincement ou pincement de la deuxième cloison 3 entre les deuxièmes 55 et troisièmes 56 conformations, grâce à cette inclinaison des flancs de contact. Ces coincements / pincements évitent les petits déplacements et frottements générateurs de bruits.

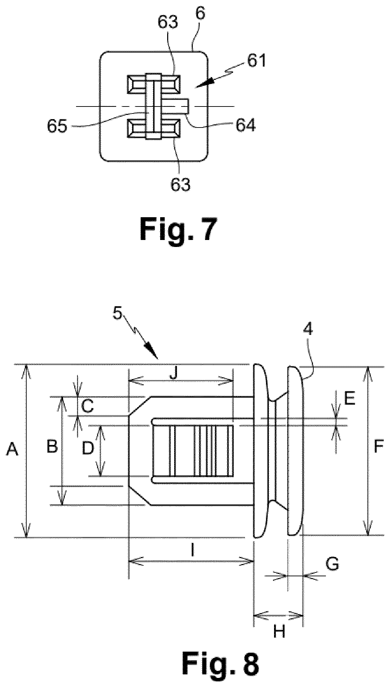

En référence aux figures 1 et 2, le pion de verrouillage 6 comporte une tête 61 conformée pour s'encastrer dans un évidement 41 de forme complémentaire ménagé dans la tête d'accrochage 4. La tête 61 du pion 6 est prolongée par un corps longitudinal 62 traversant une ouverture centrale 42 débouchante de la tête d'accrochage 4. Le corps longitudinal 62 du pion 6 a en outre une section transversale dont la forme générale est celle d'un H (figures 6 et 7). Les branches verticales 63 du H définissent la hauteur d'écartement des clips flexibles 50, 50' lors de l'insertion du pion de verrouillage entre les clips.

Le pion de verrouillage comporte également une jambe d'arrêt 64 s'élevant verticalement à partir de la branche centrale 65 du H. La jambe d'arrêt 64 forme une rampe repoussée élastiquement vers l'axe longitudinal du pion 6 au contact du bord de l'ouverture centrale 42 de la tête d'accrochage 4 lors de l'insertion du pion de verrouillage 6. La jambe d'arrêt 64 reprend élastiquement sa position initiale en échappant au bord de l'ouverture centrale 42 de la tête d'accrochage 4 lorsque le pion de verrouillage 6 est enfoncé complètement dans la tête d'accrochage 4, comme cela est visible à la figure 2. L'extrémité libre de la jambe d'arrêt 64 dépasse latéralement du bord de l'ouverture centrale 42 de la tête d'accrochage 4, ce qui verrouille le pion 6 dans sa position enfoncée dans la tête d'accrochage 4.

L'extrémité du pion 6 opposée à la tête 61 est profilée en ogive de façon à faciliter l'insertion du pion dans la tête d'accrochage 4 et entre les clips flexibles 50, 50'. Les branches latérales 63 de la section en H du pion ont de ce fait une extrémité en pointe ou en ogive.

Selon une caractéristique avantageuse de l'invention, la tête d'accrochage 4 et le dispositif de fixation 5 à clips flexibles 50, 50' sont réalisés d'un seul tenant en matière plastique. Cette matière plastique est de préférence choisie parmi :
- polyamide fibre de verre renforcé 20% (PA GF20%),
- polyamide 12 (PA 12),
- polyoxyméthylène (POM),
- mix polycarbonate et polybutylène téréphtalate (PCPBT).

D'autres matières plastiques analogues ou ayant des propriétés proches, en flexion notamment peuvent également être envisagées dans le cadre de l'invention.

Le doigt de verrouillage 6 est typiquement réalisé dans le même matériau.

Le matériau choisi est également relativement raide compte tenu de la matière nécessaire sur la partie extérieure visible de la tête d'accrochage 4, qui doit permettre la fixation d'un article ou accessoire comme indiqué ci-après.

Le principe technique et la géométrie choisis pour le dispositif d'accrochage de l'invention permettent avantageusement de réaliser les pièces par injection plastique d'un seul tenant, tant pour la tête d'accrochage 4 et le dispositif de fixation 5 d'une part que pour le pion de verrouillage 6 d'autre part, en offrant un excellent compris de raideur pour la partie extérieure visible, de robustesse et d'aptitude à la flexion au travers des clips.

Les dimensions choisies dans un exemple de réalisation particulier de l'invention sont indiquées ci-après, de façon nullement limitative, en lien avec la figure 8 :
A = 22 mm
B = 16 mm
C = 3 mm
D = 8 mm
E = 1 mm
F = 22 mm
G = 2 mm
H = 7 mm
I = 16 mm
J = 13 mm

Le dispositif d'accrochage selon l'invention a été présenté dans un montage particulièrement avantageux sur deux parois parallèles 2, 3. Ceci constitue une configuration optimale de l'invention puisqu'il a été observé que l'effort d'arrachement était entre 3 à 5 fois plus important que pour une simple paroi. Ceci tient à la fixation propre du dispositif sur chacune des parois 2, 3 et à l'entretoisement entre les deux parois ce qui solidarise fermement l'ensemble dans la zone de la fixation. On note également comme avantage supplémentaire l'élimination des phénomènes de bruits ou de vibrations qui seraient induits par de micro-déplacements du dispositif par rapport aux parois. La solidarisation des parois et l'emploi d'un pion de verrouillage en contrainte et bloqué par la jambe d'arrêt éliminent ces micro-déplacements.

De façon intéressante, le dispositif d'accrochage de l'invention est cependant utilisable pour une fixation sur une paroi simple. Dans ce cas les deuxièmes et troisièmes conformations sont inopérantes, mais ce n'est pas gênant. Un même modèle de dispositif d'accrochage peut ainsi être utilisé dans plusieurs configurations d'utilisations, cumulant des doubles parois et des parois simples. Selon un autre aspect de l'invention, le dispositif d'accrochage doit permettre l'accrochage d'un article ou accessoire en utilisant un principe de fixation connu en tant que tel et illustré dans le document CN206564619U. On utilise pour cela une forme de collerette périphérique 43 prévue sur la tête d'accrochage 4. Cette collerette 43 permet l'accrochage d'accessoires divers.

Le système de fixation de l'invention comprend d'une part un organe mâle constitué d'un dispositif d'accrochage du type ci-dessus, et d'autre un organe femelle (non illustré) solidaire de l'accessoire. On précise que l'organe femelle comprend une empreinte dans laquelle s'insère au moins en partie l'organe mâle ainsi que des griffes rétractibles ou crans de verrouillage conformés pour s'agripper automatiquement sur la collerette 43 de la tête d'accrochage 4 via des moyens de rappel élastiques. Les griffes se rétractent sous l'influence d'un poussoir actionné manuellement à l'encontre des moyens de rappel élastiques, de façon à libérer la collerette périphérique 43 de la tête 4 et à écarter l'article ou accessoire de sa zone d'accrochage sur la paroi.

Bien entendu, l'invention n'est pas limitée aux modes ou variantes de réalisation décrits précédemment.

On a également décrit une orientation particulière du dispositif d'accrochage, les clips flexibles étant disposés l'un au-dessus de l'autre. Bien entendu le dispositif peut être pivoté à 90° de sorte que les clips flexibles soient orientés de façon sensiblement verticale.

### Nomenclature utilisée :

Dispositif d'accrochage 1
Première paroi 2
Face avant de la première paroi 21
Face arrière de la première paroi 22
Deuxième paroi 3
Face avant de la première paroi 31
Face arrière de la première paroi 32
Tête d'accrochage 4
Evidement 41
Ouverture centrale 42
Collerette périphérique 43
Dispositif de fixation 5
Clip flexible 50, 50'
Branche du U 51
Zone centrale du U 52
Languette 53
Premières conformations 54
Deuxièmes conformations 55
Troisièmes conformations 56
Pion de verrouillage 6
Tête du pion 61
Corps longitudinal 62
Branches latérales du H 63
Jambe d'arrêt 64
Branche centrale du H 65

## Revendications

1. Dispositif d'accrochage (1) d'un élément mobile à une double paroi constituée d'une première paroi (2) et d'une deuxième paroi (3), le dispositif comprenant une tête d'accrochage (4) appliquée contre une face avant (21) de la première paroi (2) et située en saillie de celle-ci, la tête (4) se prolongeant suivant une direction longitudinale (X) par un dispositif de fixation (5) à clips flexibles (50, 50') traversant les deux parois (2, 3) suivant la direction longitudinale (X), un pion de verrouillage (6) étant inséré au travers de la tête d'accrochage (4) en traversant également les deux parois (2, 3) et s'interposant entre au moins deux clips flexibles (50, 50') en les écartant pour les agripper simultanément à la première paroi (2) et à la deuxième paroi (3), les clips flexibles (50, 50') comportant des premières conformations (54) aptes à coopérer en butée avec une face arrière (22) de la première paroi (2) pour plaquer la tête d'accrochage (4) contre la première paroi (2), ainsi que des deuxièmes (55) et troisièmes (56) conformations aptes à coopérer en butée respectivement avec la face avant (31) et la face arrière (32) de la deuxième paroi (3), les premières (54), deuxièmes (55) et troisièmes (56) conformations étant agencées de façon à maintenir un espace prédéterminé (IN) entre la première paroi (2) et la deuxième paroi (3), **caractérisé en ce que** les clips flexibles (50, 50') sont constitués de deux clips à bascule disposés symétriquement, chaque clip (50, 50') comportant un arceau en forme de U dont les branches (51) sont reliées à la tête d'accrochage (4) et dont une zone centrale (52) du U supporte une languette (53) s'avançant longitudinalement entre les branches (51) du U, et **en ce que** les premières (54), deuxièmes (55) et troisièmes (56) conformations sont agencées sur la languette (53) de chaque clip (50, 50'), et tournées dans des directions opposées sur les deux clips (50, 50').

2. Dispositif d'accrochage (1) selon la revendication 1, **caractérisé en ce que** les premières (54), deuxièmes (55) et troisièmes (56) conformations sont chacune constituées d'une dent ou d'un épaulement s'étendant transversalement sur toute la largeur de la languette (53).

3. Dispositif d'accrochage selon la revendication 2, **caractérisé en ce que** les premières (54), deuxièmes (55) et troisièmes (56) conformations présentent des flancs de contact avec la première (2) ou la deuxième (3) paroi inclinés d'un angle compris entre 5° et 30° par rapport à un plan transversal perpendiculaire à la direction longitudinale (X), lorsque les clips flexibles (50, 50') sont écartés par le pion de verrouillage (6).

4. Dispositif d'accrochage (1) selon l'une quelconque des revendications 1 à 3, **caractérisé en ce que** le pion de verrouillage (6) comporte une tête (61) conformée pour s'encastrer dans un évidement (41) de forme complémentaire ménagé dans la tête d'accrochage (4), la tête (61) du pion (6) étant prolongée par un corps longitudinal (62) traversant une ouverture centrale (42) débouchante de la tête d'accrochage (4), le corps longitudinal (62) ayant en outre une section transversale dont la forme générale est celle d'un H.

5. Dispositif d'accrochage (1) selon la revendication 4, **caractérisé en ce que** le pion de verrouillage (6) comporte une jambe d'arrêt (64) s'élevant à partir de la branche centrale (65) du H, la jambe d'arrêt (64) formant une rampe repoussée élastiquement vers l'axe longitudinal du pion (6) au contact du bord de l'ouverture centrale (42) de la tête d'accrochage (4) lors de l'insertion du pion de verrouillage (6) et reprenant élastiquement sa position initiale en échappant au bord de l'ouverture centrale (42) de la tête d'accrochage (4) lorsque le pion de verrouillage (6) est enfoncé complètement dans la tête d'accrochage (4).

6. Dispositif d'accrochage (1) selon l'une quelconque des revendications précédentes, **caractérisé en ce que** la distance mesurée longitudinalement entre la tête d'accrochage (4) et les troisièmes conformations (56) est comprise entre 8 et 25 mm, et est en particulier de l'ordre de 10 mm.

7. Dispositif d'accrochage (1) selon l'une quelconque des revendications précédentes, **caractérisé en ce que** la tête d'accrochage (4) et le dispositif de fixation (5) à clips flexibles (50, 50') sont réalisés d'un seul tenant en matière plastique, en particulier une matière plastique choisie parmi :
Polyamide fibre de verre renforcé 20% (PA GF20%), polyamide 12 (PA 12), polyoxyméthylène (POM), mix polycarbonate et polybutylène téréphtalate (PCPBT).

8. Dispositif d'accrochage (1) selon l'une quelconque des revendications précédentes, **caractérisé en ce que** la tête d'accrochage (4) comporte une collerette périphérique (43) permettant l'accrochage d'accessoires divers sur la collerette.

9. Système de fixation d'un accessoire sur au moins une paroi (2, 3), **caractérisé en ce qu'**il comprend d'une part un organe mâle constitué par un dispositif d'accrochage (1) selon la revendication 8 fixé à ladite paroi (2, 3), et d'autre part un organe femelle solidaire de l'accessoire, l'organe femelle comprenant une empreinte dans laquelle s'insère au moins en partie l'organe mâle ainsi que des griffes rétractibles conformées pour s'agripper automatiquement sur la collerette (43) de la tête d'accrochage (4) via des moyens de rappel élastiques, les griffes étant rétractées sous l'influence d'un poussoir actionné manuellement à l'encontre des moyens de rappel élastiques de façon à libérer la collerette (43) de la tête d'accrochage (4).

10. Véhicule automobile, **caractérisé en ce qu'**il comprend une première paroi (2) et une deuxième paroi (3) sensiblement parallèles et non accolées, ainsi qu'au moins un dispositif d'accrochage (1) selon l'une quelconque des revendications 1 à 8 fixé auxdites parois (2, 3).

## Patentansprüche

1. Vorrichtung zur Befestigung (1) eines beweglichen Elements an einer Doppelwand, bestehend aus einer ersten Wand (2) und einer zweiten Wand (3), wobei die Vorrichtung einen Befestigungskopf (4) aufweist, der an einer Vorderseite (21) der ersten Wand (2) anliegt und von dieser vorsteht, wobei sich der Kopf (4) in Längsrichtung (X) durch eine Befestigungsvorrichtung (5) mit flexiblen Clips (50, 50') fortsetzt, die die beiden Wände (2, 3) in Längsrichtung (X) durchqueren, wobei ein Verriegelungsstift (6), der durch den Befestigungskopf (4) hindurchgeführt wird, dabei ebenfalls die beiden Wände (2, 3) durchdringt und sich zwischen mindestens zwei flexible Clips (50, 50') schiebt, diese auseinanderdrückt, um sie gleichzeitig an der ersten Wand (2) und der zweiten Wand (3) festzuhalten, wobei die flexiblen Clips (50, 50') erste Ausformungen (54) aufweisen, die dazu geeignet sind, an einer Rückseite (22) der ersten Wand (2) anzuliegen, um den Befestigungskopf (4) gegen die erste Wand (2) zu drücken, sowie zweite (55) und dritte (56) Ausformungen, die dazu geeignet sind, jeweils an der Vorderseite (31) und der Rückseite (32) der zweiten Wand (3) anzuliegen, wobei die erste (54), zweite (55) und dritte (56) Ausformung so ausgelegt sind, dass sie einen vorbestimmten Abstand (IN) zwischen der ersten Wand (2) und der zweiten Wand (3) aufrechterhalten, **dadurch gekennzeichnet, dass** die flexiblen Clips (50, 50') aus zwei symmetrisch angeordneten Bügelclips bestehen, wobei jeder Clip (50, 50') einen U-förmigen Bügel aufweist, dessen Schenkel (51) mit dem Befestigungskopf (4) verbunden sind, und wobei ein mittlerer Bereich (52) des U eine Lasche (53) trägt, die in Längsrichtung zwischen den Schenkeln (51) des U hervorsteht, und dadurch, dass die ersten (54), zweiten (55) und dritten (56) Ausformungen auf der Lasche (53) jedes Clips (50, 50') angeordnet sind und an den beiden Clips (50, 50') in entgegengesetzte Richtungen weisen.

2. Vorrichtung zur Befestigung (1) nach Anspruch 1, **dadurch gekennzeichnet, dass** die ersten (54), zweiten (55) und dritten (56) Ausformungen jeweils aus einem Zahn oder einer Schulter bestehen, der/die sich quer über die gesamte Breite der Lasche erstreckt (53).

3. Vorrichtung zur Befestigung nach Anspruch 2, **dadurch gekennzeichnet, dass** die ersten (54), zweiten (55) und dritten (56) Ausformungen Kontaktflanken mit der ersten (2) oder der zweiten (3) Wand in einem Winkel zwischen 5° und 30° in Bezug auf eine Querebene senkrecht zur Längsrichtung (X) aufweisen, wenn die flexiblen Clips (50, 50') durch den Verriegelungsstift (6) auseinandergedrückt werden.

4. Vorrichtung zur Befestigung (1) nach einem der Ansprüche 1 bis 3, **dadurch gekennzeichnet, dass** der Verriegelungsstift (6) einen Kopf (61) aufweist, der so geformt ist, dass er in eine komplementär geformte Aussparung (41) im Befestigungskopf (4) eingreift, wobei der Kopf (61) des Stifts (6) durch einen Längskörper (62) verlängert ist, der eine durchgehende zentrale Öffnung (42) des Befestigungskopfes (4) durchquert, wobei der Längskörper (62) zudem einen Querschnitt aufweist, dessen allgemeine Form die eines H ist.

5. Vorrichtung zur Befestigung (1) nach Anspruch 4, **dadurch gekennzeichnet, dass** der Verriegelungsstift (6) einen Rastarm (64) aufweist, der vom mittleren Schenkel (65) des H-Profils ausgeht, wobei der Rastarm (64) eine Rampe bildet, die beim Einführen des Verriegelungsstifts (6) bei Kontakt mit dem Rand der zentralen Öffnung (42) des Befestigungskopfes (4) elastisch in Richtung der Längsachse des Stifts (6) gedrückt wird und beim Lösen vom Rand der zentralen Öffnung (42) des Befestigungskopfes (4) zurückkehrt, wenn der Verriegelungsstift (6) vollständig in den Befestigungskopf (4) eingedrückt ist.

6. Vorrichtung zur Befestigung (1) nach einem der vorhergehenden Ansprüche, **dadurch gekennzeichnet, dass** der in Längsrichtung gemessene Abstand zwischen dem Befestigungskopf (4) und den dritten Ausformungen (56) zwischen 8 und 25 mm beträgt und insbesondere in der Größenordnung von 10 mm liegt.

7. Vorrichtung zur Befestigung (1) nach einem der vorhergehenden Ansprüche, **dadurch gekennzeichnet, dass** der Befestigungskopf (4) und die Befestigungsvorrichtung (5) mit flexiblen Clips (50, 50') einstückig aus Kunststoff gefertigt sind, insbesondere aus einem Kunststoff, der ausgewählt ist aus:
20 % glasfaserverstärktem Polyamid (PA GF20 %), Polyamid 12 (PA 12), Polyoxymethylen (POM), Polycarbonat-Polybutylenterephthalat-Mischung (PCPBT).

8. Vorrichtung zur Befestigung (1) nach einem der vorhergehenden Ansprüche, **dadurch gekennzeichnet, dass** der Befestigungskopf (4) einen umlaufenden Kragen (43) aufweist, der das Anbringen verschiedener Zubehörteile an dem Kragen ermöglicht.

9. System zur Befestigung eines Zubehörs an mindestens einer Wand (2, 3), **dadurch gekennzeichnet, dass** es einerseits ein männliches Element aufweist, das aus einer an der genannten Wand (2, 3) befestigten Vorrichtung zur Befestigung (1) nach Anspruch 8 besteht, und andererseits ein mit dem Zubehörteil fest verbundenes weibliches Element, wobei das weibliche Element eine Aussparung aufweist, in die das männliche Element zumindest teilweise eingreift, sowie einziehbare Klauen, die so ausgebildet sind, dass sie sich über elastische Rückstellmittel automatisch am Kragen (43) des Befestigungskopfes (4) festklemmen, wobei die Klauen unter dem Einfluss eines manuell betätigten Druckknopfes entgegen der elastischen Rückstellvorrichtungen zurückgezogen werden, um den Kragen (43) des Befestigungskopfes (4) freizugeben.

10. Kraftfahrzeug, **dadurch gekennzeichnet, dass** es eine erste Wand (2) und eine zweite Wand (3) aufweist, die im Wesentlichen parallel zueinander verlaufen und nicht aneinander grenzen, sowie mindestens eine Vorrichtung zur Befestigung (1) nach einem der Ansprüche 1 bis 8, die an den Wänden (2, 3) befestigt ist.

## Claims

1. Device (1) for attaching a movable element to a double wall constituted by a first wall (2) and a second wall (3), the device comprising an attachment head (4) applied against a front face (21) of the first wall (2) and situated projecting therefrom, the head (4) being extended in a longitudinal direction (X) by a fastening device (5) with flexible clips (50, 50') passing through the two walls (2, 3) in the longitudinal direction (X), a locking pin (6) being inserted through the attachment head (4), also passing through the two walls (2, 3) and being interposed between at least two flexible clips (50, 50') separating them to simultaneously grip the first wall (2) and the second wall (3), the flexible clips (50, 50') including first shapes (54) capable of cooperating in abutment with a rear face (22) of the first wall (2) so as to press the attachment head (4) against the first wall (2), as well as second shapes (55) and third shapes (56) capable of cooperating in abutment with the front face (31) and the rear face (32), respectively, of the second wall (3), the first shapes (54), second shapes (55) and third shapes (56) being arranged so as to maintain a predetermined space (IN) between the first wall (2) and the second wall (3), **characterized in that** the flexible clips (50, 50') are constituted by two symmetrically arranged toggle clips, each clip (50, 50') including a U-shaped arch, the branches (51) of which are connected to the attachment head (4) and in which a central zone (52) of the U supports a tab (53) extending longitudinally between the branches (51) of the U, and **in that** the first shapes (54), second shapes (55) and third shapes (56) are arranged on the tab (53) of each clip (50, 50') and turned in opposite directions on the two clips (50, 50').

2. Attachment device (1) according to Claim 1, **characterized in that** the first shapes (54), second shapes (55) and third shapes (56) are each constituted by a tooth or a shoulder extending transversely over the entire width of the tab (53).

3. Attachment device according to Claim 2, **characterized in that** the first shapes (54), second shapes (55) and third shapes (56) have contact flanks with the first wall (2) or the second wall (3) inclined at an angle of between 5° and 30° with respect to a transverse plane perpendicular to the longitudinal direction (X), when the flexible clips (50, 50') are separated by the locking pin (6).

4. Attachment device (1) according to any one of Claims 1 to 3, **characterized in that** the locking pin (6) includes a head (61) shaped to fit into a recess (41) of complementary shape formed in the attachment head (4), the head (61) of the pin (6) being extended by a longitudinal body (62) passing through a central through-opening (42) in the attachment head (4), the longitudinal body (62) also having in cross section the general shape of an H.

5. Attachment device (1) according to Claim 4, **characterized in that** the locking pin (6) includes a stop leg (64) rising from the central branch (65) of the H, the stop leg (64) forming a ramp pushed back elastically towards the longitudinal axis of the pin (6) in contact with the edge of the central opening (42) of the attachment head (4) during insertion of the locking pin (6) and returning elastically to the initial position thereof by disengaging from the edge of the central opening (42) of the attachment head (4) when the locking pin (6) is inserted completely in the attachment head (4).

6. Attachment device (1) according to any one of the preceding claims, **characterized in that** the distance measured longitudinally between the attachment head (4) and the third shapes (56) is between 8 mm and 25 mm, and is in particular of the order of 10 mm.

7. Attachment device (1) according to any one of the preceding claims, **characterized in that** the attachment head (4) and the fastening device (5) with flexible clips (50, 50') are made as a single piece of plastic, in particular a plastic selected from:
Glass fibre reinforced polyamide 20% (PA GF20%), polyamide 12 (PA 12), polyoxymethylene (POM), polycarbonate and polybutylene terephthalate mix (PCPBT).

8. Attachment device (1) according to any one of the preceding claims, **characterized in that** the attachment head (4) includes a peripheral flange (43) for attaching various accessories to the flange.

9. System for fastening an accessory to at least one wall (2, 3), **characterized in that** it comprises on the one hand a male member constituted by an attachment device (1) according to Claim 8 fastened to said wall (2, 3), and on the other hand a female member integral with the accessory, the female member comprising a cavity into which the male member is inserted at least in part, as well as retractable claws shaped to automatically grip the flange (43) of the attachment head (4) via elastic return means, the claws being retracted under the influence of a pusher actuated manually against the elastic return means, so as to release the flange (43) of the attachment head (4).

10. Motor vehicle, **characterized in that** it comprises a first wall (2) and a second wall (3) which are substantially parallel and not adjoining, as well as at least one attachment device (1) according to any one of Claims 1 to 8 fastened to said walls (2, 3).
